# EUROPÄISCHE PATENTANMELDUNG

(11) **EP 2 871 111 A2**
(43) Veröffentlichungstag der Anmeldung: **13.05.2015**
(21) Anmeldenummer: 14191838.3
(22) Anmeldetag: 05.11.2014
(51) Int. Cl.: B62B 3/10

(54) **Halte-, Fixierungs- und/oder Handhabungsvorrichtung für flächige Werkstücke wie Glasplatten**

(30) Priorität: 07.11.2013 DE 102013222680
(71) Anmelder: Uplifter GmbH & Co.KG, 92543 Guteneck (DE)
(72) Erfinder: Lobinger, Martin, 92543 Guteneck (DE)
(74) Vertreter: Benninger, Johannes

(57) **Zusammenfassung**

Die vorliegende Erfindung betrifft eine Halte-, Fixierungs- und/oder Handhabungsvorrichtung (10) für flächige Werkstücke wie Glasplatten (12), Stahlplatten, Kunststoffplatten, Holzplatten o. dgl. Flachmaterial, die mittels eines über einen Ausleger (20) oder Rahmenabschnitt mit einem Stützabschnitt (16) verbundenen Fixierungsmittels (24) an wenigstens einer Stelle ihrer Oberfläche (56) in vertikaler oder leicht gegen eine Vertikale geneigter Lage gehalten sind. Der Stützabschnitt (16) und/oder ein Rahmen (22) stützen sich über wenigstens drei Räder (26) und/oder Rollen (18) auf dem Boden ab. Das Fixierungsmittel (24) wird durch wenigstens einen mit Unterdruck beaufschlagbaren Sauggreifer (34) gebildet, der mit einer steuerbaren Unterdruckquelle (48) gekoppelt ist, wobei die Teil der Vorrichtung (10) und/oder an dieser montiert sind.

## Beschreibung

Die vorliegende Erfindung betrifft eine Halte-, Fixierungs- und/oder Handhabungsvorrichtung für flächige Werkstücke wie Glasplatten, Stahlplatten, Kunststoffplatten, Holzplatten o. dgl.

Da schwere Plattenelemente wie Glasplatten, Stahlplatten oder dergleichen Plattenmaterial nur schwer von Hand getragen werden kann, werden sie in der Regel zumindest unterseitig abgestützt, vorzugsweise auf Rollbrettern o. dgl., so dass sie auf ebenem Untergrund befördert werden können, wobei eine oder zwei Personen zur Abstützung der Platten während ihrer rollenden Fortbewegung erforderlich sind.

Um diese Art der Handhabung zu verbessern und ggf. auch den Transport durch eine einzelne Person zu ermöglichen, sind verschiedene Handhabungssysteme bekannt geworden. Beispiele hierfür sind die Glas-Handhabungssysteme, wie sie sich in der WO 2004/ 005 106 A1 oder in der WO 2005/105 541 A1 offenbart finden. Diese bekannten Handhabungssysteme umfassen jeweils einen Rahmen, der sich mit vier unterseitigen Rollen am Boden abstützt. Auf unteren Stützstreben können einzelne Platten mit unteren Längskanten abgesetzt werden. Am Rahmen sind insgesamt vier höhenverstellbare Sauggreifer angeordnet, welche eine flächige Fixierung der zu transportierenden Glasplatte ermöglichen. Der Rahmen ist zumindest so hoch ausgeführt, dass die höhenverstellbaren Sauggreifer auch für einen Transport von Glasplatten größerer Ausdehnung in ausreichender Höhe platziert werden können, um eine zuverlässige Abstützung ohne die Gefahr einer ungünstigen Hebelwirkung zu ermöglichen.

Diese aus der WO 2004/ 005 106 A1 oder aus der WO 2005/ 105 541 A1 bekannten Glas-Handhabungssysteme sind jedoch besonders dann nachteilig, wenn die gesamte Handhabung von nur einer Person durchgeführt werden soll. Zudem ermöglichen die Sauggreifer nicht unter allen auftretenden Betriebszuständen eine exakt definierbare Haltekraft.

Ein weiteres Glas-Handhabungssystem ist aus der GB 2 360 504 A bekannt. Hier befindet sich ein mit einer Handpumpe gekoppelter Unterdrucksauger am Ende eines rahmenartiges Auslegers, der ein Greifen und Aufnehmen einer horizontal auf dem Boden oder einer Unterlage liegender Glas-, Metall- oder sonstigen Platte und dessen Kippen in vertikaler Richtung erlaubt, indem ein abgewinkelter Rahmenabschnitt mit daran angeordneten Handgriffen nach unten gedrückt wird. Im abgewinkelten Bereich des Rahmens befinden sich zwei Stützräder, so dass das Handhabungssystem auf dem Boden gerollt und die Platte an einen gewünschten Ort verbracht werden kann.

Ein Ziel der vorliegenden Erfindung liegt in der Schaffung einer kompakten und vorzugsweise von einer einzelnen Person handhabbaren Halte-, Fixierungs- und/oder Handhabungsvorrichtung für flächige Werkstücke wie Glasplatten, Stahlplatten, Kunststoffplatten o. dgl., bei der die Haltekraft des abgestützten und/oder fixierten Platten an der Vorrichtung zumindest definierbar, vorzugsweise einstellbar ist. Während ihrer Handhabung sollen die Platten stabil abgestützt und gehalten bzw. fixiert sein, insbesondere in vertikaler oder leicht gegenüber einer Vertikalen geneigten Transportlage.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen, der nachfolgenden Beschreibung sowie den anliegenden Zeichnungen.

Zur Erreichung des genannten Ziels schlägt die Erfindung eine Halte-, Fixierungs- und/oder Handhabungsvorrichtung für flächige Werkstücke wie Glasplatten, Stahlplatten, Kunststoffplatten, Steinplatten o. dgl. Flachmaterial vor, welche Platten mittels eines über einen Ausleger oder Rahmenabschnitt mit einem Stützabschnitt verbundenen Fixierungsmittels an wenigstens einer Stelle ihrer Oberfläche in vertikaler oder leicht gegen eine Vertikale geneigter Lage gehalten sind. Der Stützabschnitt weist wenigstens drei Räder und/oder Rollen auf, mit denen sich der Stützabschnitt sowie die gesamte Vorrichtung auf dem Boden abstützen. Das Fixierungsmittel ist durch wenigstens einen mit Unterdruck beaufschlagbaren Sauggreifer gebildet, der mit einer von einem Benutzer der Vorrichtung steuerbaren Unterdruckquelle gekoppelt ist, die ein Bestandteil der Vorrichtung ist und/oder an dieser montiert ist. Es sei an dieser Stelle betont, dass die flächigen Werkstücke normalerweise im Wesentlichen nur mittels der Fixierungsmittel bzw. die Sauggreifer gehalten sind, während eine Abstützung einer nach unten weisenden Werkstückkante an der Handhabungsvorrichtung normalerweise nicht vorgesehen ist. Dadurch ist das Werkstück "frei schwebend" an den Fixierungsmitteln bzw. an den Sauggreifern gehalten und kann in der Höhe verstellt, um eine ungefähr horizontale Achse verdreht und ggf. in seiner Neigung verstellt werden.

Die Unterdruckquelle kann insbesondere einen Kompressor mit elektromotorischem Antrieb umfassen, dessen Saugdruck veränderlich steuerbar ist. Weiterhin ist es sinnvoll, den elektromotorischen Antrieb des Kompressors mit einer elektrischen Energieversorgung mit wenigstens einem Akkumulator zu koppeln.

Durch den steuerbaren Unterdruck kann der Benutzer nach Aufsetzen der zu haltenden und zu transportierenden Platte bzw. Glasplatte den Unterdruck durch Aktivierung des Kompressors erhöhen und auf diese Weise zuverlässig verhindern, dass sich die Platte von der Vorrichtung bzw. von ihrem Platz an der Vorrichtung lösen kann, bspw. bei Überrollen von Bodenunebenheiten. Für den Benutzer kann bspw. ein Schalter vorhanden sein, mit dem er den elektromotorischen Antrieb des Kompressors ein- und ausschalten kann, um einen gewünschten Unterdruck anzuwählen. Es kann auch vorgesehen sein, dass Vorwählschalter oder -taster vorgesehen sind, mit denen ein vordefinierter Unterdruck bzw. verschiedene vordefinierte Unterdruckwerte angewählt werden können. Da verschieden schwere Platten und/oder verschieden starke Platten jeweils angepasster Unterdruckwerte bedürfen, um sowohl eine zuverlässige Fixierung zu gewährleisten als auch um Beschädigungen durch zu starken Unterdruck auszuschließen, kann es sinnvoll sein, variable Unterdruckwerte zuzulassen und für den Benutzer anwählbar zu machen.

Vorzugsweise umfasst der Stützabschnitt einen horizontal liegenden Teil eines Rahmens der Vorrichtung, der mit einem nach oben abgewinkelten Säulenabschnitt verbunden ist, an dem das Fixierungsmittel angeordnet ist.

Das Fixierungsmittel kann insbesondere einen, zwei oder drei oder auch mehr gleichartig oder unterschiedlich große Sauggreifer umfassen, deren Wirkoberflächen jeweils parallel zueinander angeordnet sind. Zudem kann vorgesehen sein, dass der wenigstens eine Sauggreifer bzw. wenigstens einer der zwei oder mehr Sauggreifer mit der Unterdruckquelle gekoppelt ist. Auf diese Weise sind die Sauggreifer in der Lage, auch große Werkstücke wie schwere Glasplatten zuverlässig zu halten und handhabbar zu machen, insbesondere zu Transportzwecken und zu Zwecken der Bereitstellung für einen Einbau oder eine Montage.

Weiterhin kann das Fixierungsmittel entlang des Säulenabschnittes in der Höhe verstellbar sein, wobei die eingestellte Höhenlage jeweils feststellbar ist. Diese Höhenverstellbarkeit kann bspw. mittels einer Handseilwinde erfolgen, bei der an der Rückseite der vertikal verlaufenden Stützsäule eine Handseilwinde mit Kurbel angeordnet ist, deren Seil über eine oberseitig an der Säule angeordnete Umlenkrolle geführt und an den Fixierungselementen verankert ist. Die Fixierungselemente können als vertikal verstellbarer Schlitten an der Säule geführt sein, wodurch in Zusammenwirkung mit der Handseilwinde die gewünschte stufenlose Höhenverstellbarkeit gegeben ist.

Eine weitere vorteilhafte Ausführungsvariante der erfindungsgemäßen Vorrichtung sieht vor, dass zumindest ein das Werkstück fixierender Abschnitt des Fixierungsmittels mitsamt den Sauggreifern um eine in etwa horizontal liegende Drehachse verschwenkbar ist, wobei die eingestellte Drehlage jeweils feststellbar ist. Auf diese Weise können die Werkstücke in eine für eine Montage oder einen Transport günstigere Winkellage gebracht werden. So können sie bspw. bei Bedarf um 90 Grad oder um 180 Grad verdreht werden.

Wahlweise kann die Unterdruckquelle bzw. der Kompressor mit dem elektromotorischen Antrieb lösbar am Rahmen der Vorrichtung fixiert sein. Es kann auch vorgesehen sein, dass der wenigstens eine Akkumulator lösbar am Rahmen fixiert ist. Durch Anordnung der Unterdruckquelle bzw. des Kompressors am Rahmen der Vorrichtung umfasst diese alle einzelnen Komponenten, um ein autarkes und mobiles Halte- und Handhabungssystem für schweres Plattenmaterial zur Verfügung zu stellen, das einen sicheren und schonenden Transport des Plattenmaterials erlaubt.

Eine weitere Ausführungsvariante der erfindungsgemäßen Vorrichtung kann vorsehen, dass dem wenigstens einen mit der Unterdruckquelle gekoppelten Sauggreifer ein Drucksensor zur Erfassung eines zwischen der Plattenoberfläche und dem Sauggreifer wirkenden Saugdrucks zugeordnet ist. Zudem kann dieser Drucksensor mit einer Steuereinrichtung gekoppelt sein, die bei Bedarf eine Aktivierung der Unterdruckquelle zur Aufrechterhaltung eines Solldrucks für den zwischen Plattenoberfläche und dem Sauggreifer wirkenden Saugdruck vorsieht. Auf diese Weise kann die Betriebssicherheit der erfindungsgemäßen Vorrichtung wesentlich erhöht werden, da ein unter Umständen abfallender Unterdruck am Sauggreifer durch die Erfassung der dort herrschenden Druckverhältnisse erkannt und einem solchen Druckabfall entgegengewirkt werden kann, indem die Unterdruckquelle in einer Weise aktiviert wird, dass sie dem Druckabfall entgegenarbeitet. Wahlweise kann die Erfassung des Unterdrucks an dem wenigstens einen Sauggreifer auch dafür verwendet werden, um den eingestellten bzw. vorgewählten Unterdruck möglichst exakt zu erreichen sowie bei Druckschwankungen auch aufrechtzuerhalten.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsvariante einer erfindungsgemäßen Halte-, Fixierungs- und/oder Handhabungsvorrichtung für flächige Werkstücke wie z.B. Glasplatten.
Fig. 2 zeigt eine weitere Perspektivansicht der Vorrichtung gemäß Fig. 1.
Fig. 3 zeigt eine schematische Darstellung einer Verschaltung von Unterdruckquelle und Sauggreifer der Vorrichtung gemäß Fig. 1.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

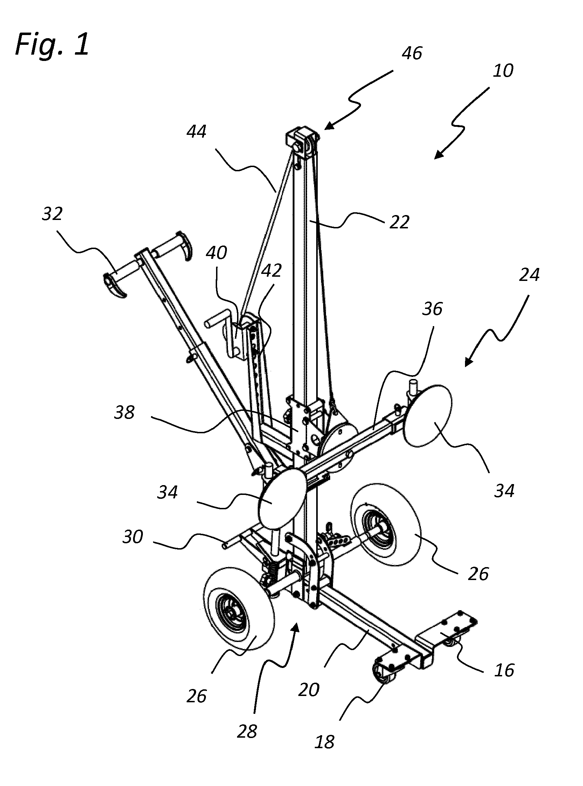

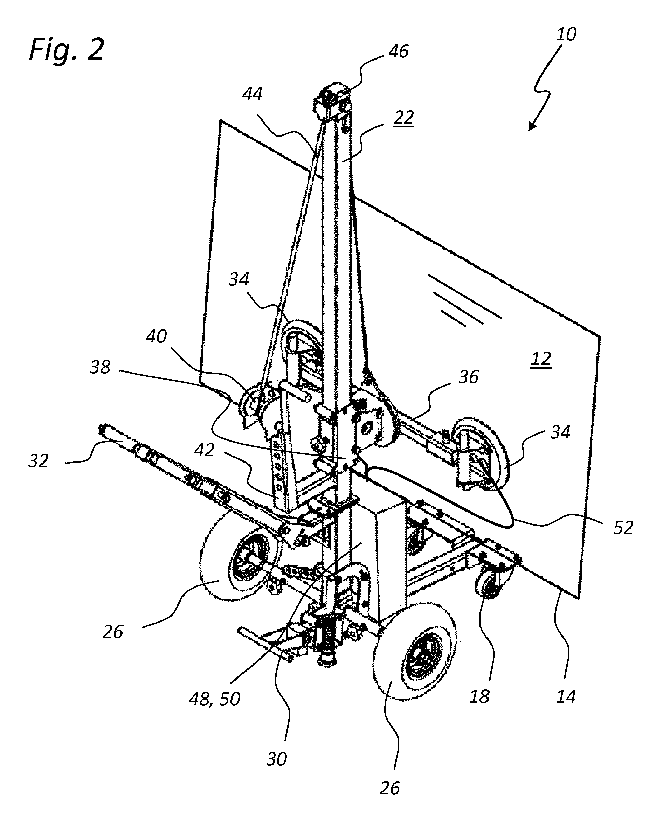

Die beiden schematischen Perspektivansichten der Fig. 1 sowie der Fig. 2 zeigen jeweils eine Ausführungsvariante einer erfindungsgemäßen Halte-, Fixierungs- und/oder Handhabungsvorrichtung 10 für flächige Werkstücke wie Glasplatten 12, Stahlplatten, Kunststoffplatten, Steinplatten o. dgl. Flachmaterial. Mit der Vorrichtung 10 sollen vorwiegend Platten gehandhabt werden; als bevorzugtes Plattenmaterial wird im Folgenden auf Glasplatten 12 Bezug genommen. Die Vorrichtung 10 weist einen unteren Stützabschnitt 16 auf, an dessen Unterseite sich zwei kleine Rollen 18 befinden. Der flächige Stützabschnitt 16 mit den beiden Rollen 18 ist über einen horizontalen Rahmenausleger 20 - im gezeigten Ausführungsbeispiel ein Vierkantrohr - mit einem vertikalen Rahmenabschnitt 22 verbunden, der als Vertikalsäule ebenfalls durch ein Vierkantrohr gebildet ist. An diesem vertikalen Rahmenabschnitt 22 befindet sich ein Fixierungsmittel 24, über das die Glasplatte 12 an ihrer Oberfläche in vertikaler oder leicht gegen eine Vertikale geneigter Lage gehalten ist. Es ist zu erwähnen, dass die Platten 12 nicht am unteren Stützabschnitt 16 aufliegen, sondern nur über das Fixierungsmittel 24 gehalten sind.

Wie es die Figuren 1 und 2 erkennen lassen, weist der Rahmenabschnitt 22 an seiner Unterseite zwei größere Laufräder 26 auf, mit denen sich der Rahmenabschnitt 22 sowie die gesamte Vorrichtung 10, gemeinsam mit den vorderen kleineren Rollen 18, auf dem Boden abstützen. Ein optionaler Klappmechanismus 28 sorgt für eine klappbare und vorzugsweise in wenigstens zwei unterschiedlichen Lagen fixierbare Verbindung zwischen dem horizontalen Ausleger 20 und dem vertikalen Rahmenabschnitt 22. Ein optionaler Fußhebel 30 kann ggf. mit einem Stützstempel zusammenwirken, mit dem die Vorrichtung 10 in einer Ruhelage auf dem Boden fixiert werden kann. Ein ggf. schwenkbarer Handhebel 32 ermöglicht die Handhabung, das Schieben und Fortbewegen der auf den Laufrädern 26 und Rollen 18 aufliegenden Vorrichtung 10 durch einen Benutzer.

Das Fixierungsmittel 24 ist in der gezeigten Ausführungsvariante durch zwei mit Unterdruck beaufschlagbare Sauggreifer 34 gebildet, die an einem Querträger 36 angeordnet sind, vorzugsweise in schwenkbaren Aufhängungen bzw. Lagerungen, so dass sie sich in ihrer jeweiligen Lage auch auf leicht gewölbte Platten 12 anpassen können. Der Querträger 36 ist in schwenkbarer Lagerung an einem Schlitten 38 befestigt, der höhenverstellbar am vertikalen Rahmenabschnitt 22 geführt ist. Die Höhenverstellbarkeit erfolgt hierbei durch den Benutzer mittels einer handkurbelbetätigten Seilwinde 40, die an einem separaten Ausleger 42 am Rahmenabschnitt 22 fixiert ist. Über ein Zugseil 44, das über eine Rolle 46 an der oberen Stirnseite des Rahmenabschnitt 22 umgelenkt ist, und das eine Verbindung zwischen dem Schlitten 38 und der Seilwinde 42 herstellt, erfolgt die variable Höhenjustierung des am Schlitten 38 befestigten Querträgers 36, an dessen beiden horizontalen Enden wiederum die beiden Sauggreifer 34 angeordnet sind.

Wahlweise kann der Querträger 36 eine Schwenklagerung aufweisen, so dass die beiden Sauggreifer 34 mitsamt einer daran gehaltenen Platte 12 um eine ungefähr horizontale Achse verdreht werden können. Auf diese Weise kann ein hochkant transportiertes Werkstück bei Bedarf in eine Querlage oder umgekehrt gebracht werden.

Gemäß der vorliegenden Erfindung sind die beiden Sauggreifer 34 mit einer Unterdruckquelle 48 gekoppelt, die hier nur angedeutet ist und insbesondere durch einen elektromotorisch angetriebenen Kompressor 50 gebildet sein kann, der über Saugleitungen 52 mit den beiden Sauggreifern 34 gekoppelt ist. Die Unterdruckquelle 48 bzw. der elektromotorisch betriebene Kompressor kann in einer Weise von einem Benutzer der Vorrichtung 10 gesteuert werden, dass der an den Sauggreifern 34 anliegende Unterdruck vorzugsweise variabel steuerbar ist. Gemäß der Erfindung ist die Unterdruckquelle 48 bzw. der Kompressor 50 ein Bestandteil der Vorrichtung 10 und an dieser montiert. Im gezeigten Ausführungsbeispiel kann der Kompressor 50 bzw. die Unterdruckquelle 48 - vorzugsweise mit einem integrierten Akkumulator zur Energieversorgung - in einem Gehäuse angeordnet sein, das bzw. auf dem horizontalen Rahmenausleger 20 abgestützt sein kann, wie dies in Fig. 2 angedeutet ist. Um die einzelnen Komponenten der Vorrichtung 10 deutlicher zu zeigen, ist das Gehäuse mit dem Kompressor 50 bzw. der Unterdruckquelle 48 in der Darstellung der Fig. 1 weggelassen. Eine Bedien- oder Schalterkonsole o. dgl. zur Aktivierung der Unterdruckbeaufschlagung an den Sauggreifern 34 und/oder zur Steuerung des Unterdrucks kann wahlweise am Gehäuse oder auch bspw. am Handgriff 32 angeordnet sein, was hier jedoch ebenfalls nicht gezeigt ist.

Durch den steuerbaren Unterdruck, der an den Sauggreifern 34 anliegt, kann der Benutzer nach Aufsetzen der zu haltenden und zu transportierenden Glasplatte 12 den Unterdruck durch Aktivierung des Kompressors 50 erhöhen und auf diese Weise zuverlässig verhindern, dass sich die Platte 12 von der Vorrichtung 10 bzw. von den Sauggreifern 34 der Vorrichtung 10 lösen kann, bspw. beim Überrollen von Bodenunebenheiten. Für den Benutzer kann bspw. ein Schalter vorhanden sein, mit dem er den elektromotorischen Antrieb des Kompressors 50 ein- und ausschalten kann, um einen gewünschten Unterdruck anzuwählen. Es kann auch vorgesehen sein, dass Vorwählschalter oder -taster vorgesehen sind, mit denen ein vordefinierter Unterdruck bzw. verschiedene vordefinierte Unterdruckwerte angewählt werden können. Da verschieden schwere Platten 12 und/oder verschieden starke Platten 12 jeweils angepasster Unterdruckwerte bedürfen, um sowohl eine zuverlässige Fixierung zu gewährleisten als auch um Beschädigungen durch zu starken Unterdruck auszuschließen, kann es sinnvoll sein, variable Unterdruckwerte zuzulassen und für den Benutzer anwählbar zu machen.

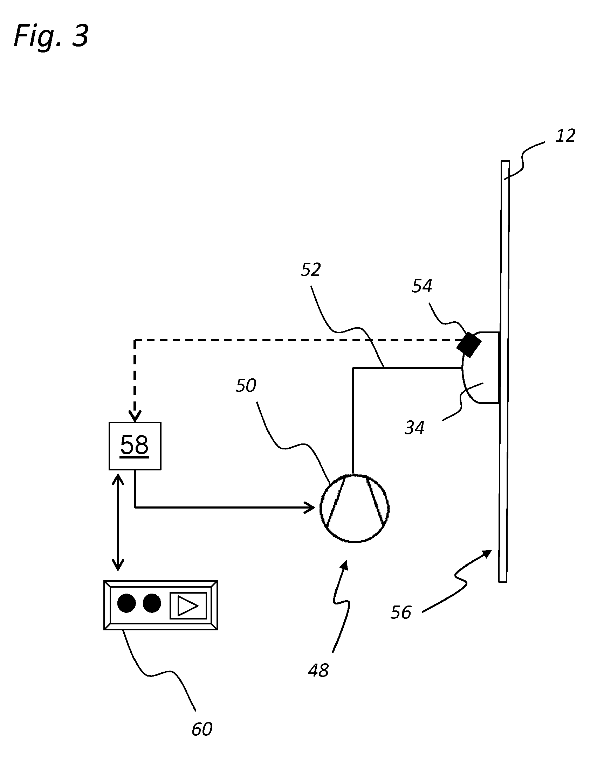

Wie es die schematische Darstellung der Fig. 3 andeutet, kann eine weitere Ausführungsvariante der erfindungsgemäßen Vorrichtung 10 vorsehen, dass dem wenigstens einen mit der Unterdruckquelle 48 gekoppelten Sauggreifer 34 ein zusätzlicher Drucksensor 54 zur Erfassung eines zwischen der Plattenoberfläche 56 und dem Sauggreifer 34 wirkenden Saugdrucks zugeordnet ist. Der Drucksensor 54 ist vorzugsweise dem Sauggreifer 34 zugeordnet bzw. kann dort integriert sein. Zudem ist dieser Drucksensor 54 mit einer Steuereinrichtung 58 gekoppelt, die bei Bedarf eine Aktivierung der Unterdruckquelle 48 zur Aufrechterhaltung eines Solldrucks zwischen Plattenoberfläche 56 und dem Sauggreifer 34 vorsieht. Die Steuereinrichtung 58 kann zudem mit einer Bedien- und/oder Anzeigenkonsole 60 gekoppelt sein, mit dem die verschiedenen Betriebszustände der Sauggreifer 34 visualisiert und dem Benutzer angezeigt werden können, und über die der Benutzer auf die Anlage 58 und damit auf die Unterdruckquelle 48 und damit auf die Sauggreifer 34 einwirken kann, insbesondere durch Steuerung des dort anliegenden Saugdrucks oder auch zu dessen Deaktivierung, wenn die Platte 12 abgenommen werden soll.

In der gezeigten und beschriebenen Weise kann die Betriebssicherheit der erfindungsgemäßen Vorrichtung 10 dadurch verbessert werden, dass ein unter Umständen abfallender Unterdruck am Sauggreifer 34 durch die Erfassung der dort herrschenden Druckverhältnisse erkannt und einem solchen Druckabfall entgegengewirkt werden kann, indem die Unterdruckquelle 48 bzw. der Kompressor 50 in einer Weise aktiviert wird, dass dem Druckabfall entgegenarbeitet und vorgebeugt wird. Wahlweise kann die Erfassung des Unterdrucks an dem wenigstens einen Sauggreifer 34 auch dafür verwendet werden, um den eingestellten bzw. vorgewählten Unterdruck möglichst exakt zu erreichen sowie bei Druckschwankungen auch aufrechtzuerhalten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Handhabungsvorrichtung
- 12: Glasplatten
- 14: Längskante
- 16: Stützabschnitt
- 18: Rollen
- 20: horizontalen Rahmenausleger
- 22: vertikalen Rahmenabschnitt
- 24: Fixierungsmittel
- 26: Laufräder
- 28: Klappmechanismus
- 30: Fußhebel
- 32: Handhebel
- 34: Sauggreifer
- 36: Querträger
- 38: Schlitten
- 40: Seilwinde
- 42: Ausleger
- 44: Zugseil
- 46: Rolle
- 48: Unterdruckquelle
- 50: Kompressor
- 52: Saugleitungen
- 54: Drucksensor
- 56: Plattenoberfläche
- 58: Steuereinrichtung
- 60: Bedien- und/oder Anzeigenkonsole

## Patentansprüche

1. Halte-, Fixierungs- und/oder Handhabungsvorrichtung (10) für flächige Werkstücke wie Glasplatten (12), Stahlplatten, Kunststoffplatten, Steinplatten o. dgl. Flachmaterial, die mittels wenigstens eines über einen Ausleger (20) oder Rahmenabschnitt mit einem Stützabschnitt (16) verbundenen Fixierungsmittels (24) an wenigstens einer Stelle ihrer Oberfläche (56) in vertikaler oder leicht gegen eine Vertikale geneigter Lage gehalten sind, wobei sich der Stützabschnitt (16) und/oder ein Rahmen (22) über wenigstens drei Räder (26) und/oder Rollen (18) auf dem Boden abstützt, und wobei das Fixierungsmittel (24) durch wenigstens einen mit Unterdruck beaufschlagbaren Sauggreifer (34) gebildet ist, der mit einer steuerbaren Unterdruckquelle (48) gekoppelt ist, die Teil der Vorrichtung (10) und/oder an dieser montiert ist.

2. Vorrichtung nach Anspruch 1, deren Unterdruckquelle (48) einen Kompressor (50) mit elektromotorischem Antrieb umfasst, dessen Saugdruck veränderlich steuerbar ist.

3. Vorrichtung nach Anspruch 2, deren elektromotorischer Antrieb des Kompressors mit einer elektrischen Energieversorgung mit wenigstens einem Akkumulator gekoppelt ist.

4. Vorrichtung nach einem der Ansprüche 1 bis 3, bei der der Stützabschnitt einen ungefähr horizontal liegenden bzw. orientierten Teil eines Rahmens der Vorrichtung umfasst, der mit einem nach oben abgewinkelten Säulenabschnitt verbunden ist, an dem das Fixierungsmittel angeordnet ist.

5. Vorrichtung nach Anspruch 4, bei der das Fixierungsmittel (24) einen, zwei, drei oder vier gleichartig oder unterschiedlich große Sauggreifer (34) umfasst, deren Wirkoberflächen jeweils parallel zueinander angeordnet sind.

6. Vorrichtung nach Anspruch 5, bei der der wenigstens eine Sauggreifer (34) bzw. wenigstens einer der zwei oder mehr Sauggreifer (34) mit der Unterdruckquelle (48) gekoppelt ist.

7. Vorrichtung nach einem der Ansprüche 4 bis 6, bei der das Fixierungsmittel (24) entlang des Säulenabschnittes (22) in der Höhe verstellbar ist, wobei die eingestellte Höhenlage jeweils feststellbar ist.

8. Vorrichtung nach einem der Ansprüche 4 bis 7, bei der zumindest ein das Werkstück fixierender Abschnitt des Fixierungsmittels (24) mitsamt den Sauggreifern (34) um eine in etwa horizontal liegende Drehachse verschwenkbar ist, wobei die eingestellte Drehlage jeweils feststellbar ist.

9. Vorrichtung nach einem der Ansprüche 1 bis 8, bei der die Unterdruckquelle (48) bzw. der Kompressor (50) mit dem elektromotorischen Antrieb lösbar am Rahmen (22, 16) der Vorrichtung (10) fixiert ist.

10. Vorrichtung nach einem der Ansprüche 3 bis 9, bei der der wenigstens eine Akkumulator lösbar am Rahmen (22, 16) fixiert ist.

11. Vorrichtung nach einem der Ansprüche 6 bis 10, bei der dem wenigstens einen mit der Unterdruckquelle (48) gekoppelten Sauggreifer (34) ein Drucksensor (54) zur Erfassung eines zwischen der Plattenoberfläche (56) und dem Sauggreifer (34) wirkenden Saugdrucks zugeordnet ist.

12. Vorrichtung nach Anspruch 11, bei dem der Drucksensor (54) mit einer Steuereinrichtung (58) gekoppelt ist, die bei Bedarf eine Aktivierung der Unterdruckquelle (48) zur Aufrechterhaltung eines Solldrucks zwischen Plattenoberfläche (56) und dem Sauggreifer (34) wirkenden Saugdrucks vorsieht.
